# EUROPEAN PATENT APPLICATION

(11) **EP 3 438 906 A1**
(43) Date of publication of application: **06.02.2019**
(21) Application number: 17774308.5
(22) Date of filing: 15.03.2017
(51) Int. Cl.: G06Q 20/42

(54) **TERMINAL DEVICE, COMMUNICATION METHOD, PAYMENT PROCESSING DEVICE, PAYMENT METHOD, AND PAYMENT SYSTEM**

(30) Priority: 29.03.2016 JP 2016066077
(71) Applicant: FeliCa Networks, Inc., Tokyo 141-0032 (JP)
(72) Inventor: KATO, Yumi, Tokyo 141-0032 (JP); KATO, Shinichi, Tokyo 141-0032 (JP)
(74) Representative: Witte, Weller & Partner Patentanwälte mbB
(86) International application number: PCT/JP2017/010333
(87) International publication number: WO 2017/169764

(57) **Abstract**

The present technology relates to a terminal apparatus, a communication method, a settlement processing apparatus, a settlement method, and a settlement system that are configured to execute the adjustment of payment with simplicity and without waste.

The terminal apparatus acquires the settlement ID of another terminal apparatus, acquires settlement conditions related with settlement processing, and sends the settlement ID of own apparatus and the settlement ID of another terminal apparatus to the settlement processing apparatus by linking these IDs and the settlement conditions. The settlement processing apparatus receives the settlement conditions related with settlement processing and the settlement IDs of the two or more terminal apparatuses linked with the settlement conditions from any one of the two or more terminal apparatuses and, on the basis of the settlement conditions and the settlement IDs of the two or more terminal apparatuses, executes settlement processing, thereby sending processing results of the settlement processing. The present technology is applicable to a settlement system.

## Description

### [Technical Field]

The present technology relates to a terminal apparatus, a communication method, a settlement processing apparatus, a settlement method, and a settlement system and, more particularly, to a terminal apparatus, a communication method, a settlement processing apparatus, a settlement method, and a settlement system that are configured to do adjustments with ease.

### [Background Art]

PTL 1 discloses a settlement management apparatus for executing the processing related with settlement by use of the electronic value correlated with a virtual money collection container to which two or more persons in charge related with settlement are set. This allows two or more users to execute one settlement in a shared manner.

### [Citation List]

### [Patent Literature]

[PTL 1]
WO 2014/103487A

### [Summary]

### [Technical Problems]

Now, in an event such as a party or a banquet in which a plurality of people participate, it has been not easy for the participants to individually pay own dues with electronic money or credit cards. In such a case, one participant collects cash from others and pays the collected cash.

A service is known in which the remaining balance of electronic money is sent to the electronic money to another person; however, use of this service requires a handling charge. Hence some users are reluctant to use this service.

Therefore, the present technology addresses the above-identified problems so as to provide the adjustment of payment simply and without waste.

### [Solution to Problems]

In carrying out the present technology and according to a first aspect thereof, there is provided a terminal apparatus. This terminal apparatus has a first communication block configured to acquire identification information related with settlement associated with another terminal apparatus; an acquisition block configured to acquire settlement conditions related with settlement processing; and a second communication block configured to send identification information related with settlement associated with own apparatus and the identification information related with the settlement of the other terminal apparatus to a settlement processing apparatus as linked with the settlement conditions.

In carrying out the present technology and according to the first aspect thereof, there is provided a communication method. This communication method has the steps of: acquiring identification information related with settlement associated with another terminal apparatus; acquiring settlement conditions related with settlement processing; and sending identification information related with settlement associated with own apparatus and the identification information related with the settlement of the other terminal apparatus to a settlement processing apparatus as linked with the settlement conditions.

In carrying out the present technology and according to a second aspect thereof, there is provided a settlement processing apparatus. This settlement processing apparatus has a first communication block configured to receive settlement conditions related with settlement processing sent from any one of the plurality of terminal apparatuses and identification information related with settlement associated with a plurality of terminal apparatuses linked with the settlement conditions; and a settlement processing block configured to execute the settlement processing on a basis of the settlement conditions and identification information related with the settlement of the plurality of terminal apparatuses, in which the first communication block sends a processing result of the settlement processing.

In carrying out the present technology and according to the second aspect thereof, there is provided a settlement method. This settlement method has the steps of: receiving settlement conditions related with settlement processing sent from any one of the plurality of terminal apparatuses and identification information related with settlement associated with a plurality of terminal apparatuses linked with the settlement conditions; executing the settlement processing on a basis of the settlement conditions and identification information related with the settlement of the plurality of terminal apparatuses; and sending a processing result of the settlement processing.

In carrying out the present technology and according to a third aspect thereof, there is provided a settlement system. This settlement system has a terminal apparatus having a first communication block configured to acquire identification information related with settlement associated with another terminal apparatus; an acquisition block configured to acquire settlement conditions related with settlement processing; and a second communication block configured to send identification information related with settlement associated with own apparatus and the identification information related with the settlement of the other terminal apparatus to a settlement processing apparatus as linked with the settlement conditions; and a settlement processing apparatus having a third communication block configured to receive settlement conditions related with settlement processing sent from any one of a plurality of terminal apparatuses and identification information related with settlement of the plurality of terminal apparatuses linked with the settlement conditions; and a settlement processing block configured to execute the settlement processing on a basis of the settlement conditions and identification information related with the settlement of the plurality of terminal apparatuses; the third communication block sending a processing result of the settlement processing.

In carrying out the present technology and according to the first aspect thereof, identification information related with the settlement of another terminal apparatus is acquired, the settlement conditions related with settlement processing are acquired, and the identification information related with the settlement of own apparatus and the identification information related with settlement of the above-mentioned another terminal apparatus are sent to the settlement processing apparatus as linked with the above-mentioned settlement conditions.

In carrying out the present technology and according to the second aspect thereof, settlement conditions related with settlement processing and identification information related with settlement of a plurality of terminal apparatuses linked with the above-mentioned settlement conditions sent from any one of terminal apparatus of the above-mentioned plurality of terminal apparatuses are received; executing the above-mentioned settlement processing is executed on the basis of the above-mentioned settlement conditions and identification information related with settlement of the above-mentioned plurality of terminal apparatuses; and processing results of the above-mentioned settlement processing are sent.

In carrying out the present technology and according to the third aspect thereof, identification information related with another terminal apparatus is acquired; settlement conditions related with settlement processing are acquired; and identification information related with settlement associated with own apparatus and identification information related with settlement of the above-mentioned another terminal apparatus are sent to a settlement processing apparatus as linked with the above-mentioned settlement conditions; and settlement conditions related with settlement processing sent from any one of a plurality of terminal apparatuses and identification information related with settlement of the above-mentioned plurality of terminal apparatuses linked with the above-mentioned settlement conditions are received; and the above-mentioned settlement processing is executed on the basis of the above-mentioned settlement conditions and identification information related with settlement of the above-mentioned plurality of terminal apparatuses in which processing results of the above-mentioned settlement processing are sent.

### [Advantageous Effects of Invention]

According to the present technology, the adjustment of payment can be executed with simplicity and without waste.

### [Brief Description of Drawings]

FIG. 1 is a diagram illustrating a configurational example of a settlement system to which the present technology is applied.
FIG. 2 is a diagram illustrating a screen display example of a payment application.
FIG. 3 is a block diagram illustrating a configurational example of the hardware of a mobile terminal apparatus.
FIG. 4 is a block diagram illustrating a configurational example of the hardware of a mediation server.
FIG. 5 is a block diagram illustrating a configurational example of functions of the mobile terminal apparatus.
FIG. 6 is a block diagram illustrating a configurational example of functions of the mediation server.
FIG. 7 is a block diagram illustrating a configurational example of functions of a settlement server.
FIG. 8 is a block diagram illustrating a configurational example of functions of photo-sharing server.
FIG. 9 is a diagram describing an example of the settlement processing to be executed in a settlement system.
FIG. 10 is a diagram describing an example of the settlement processing to be executed in the settlement system.
FIG. 11 is a block diagram illustrating another configurational example of functions of the mobile terminal apparatus.
FIG. 12 is a diagram describing another example of the settlement processing to be executed in the settlement system.
FIG. 13 is a diagram describing details of a subtraction session of electronic value.
FIG. 14 is a block diagram illustrating a configurational example of functions of an integrated server.

### [Description of Embodiments]

The following describes embodiments of the present technology with reference to drawings. It should be noted that is description will be done in the following sequence.
1. Overview of settlement system
2. First embodiment (example of electronic money service of cloud value type)
3. Second embodiment (example of electronic money service of local value type)
4. Third embodiment (example of settlement by integrated server)
5. Application examples of present technology

### 1. Overview of settlement system

First, an overview of the settlement system to which the present technology is applied is described.

### - A configurational example of the settlement system

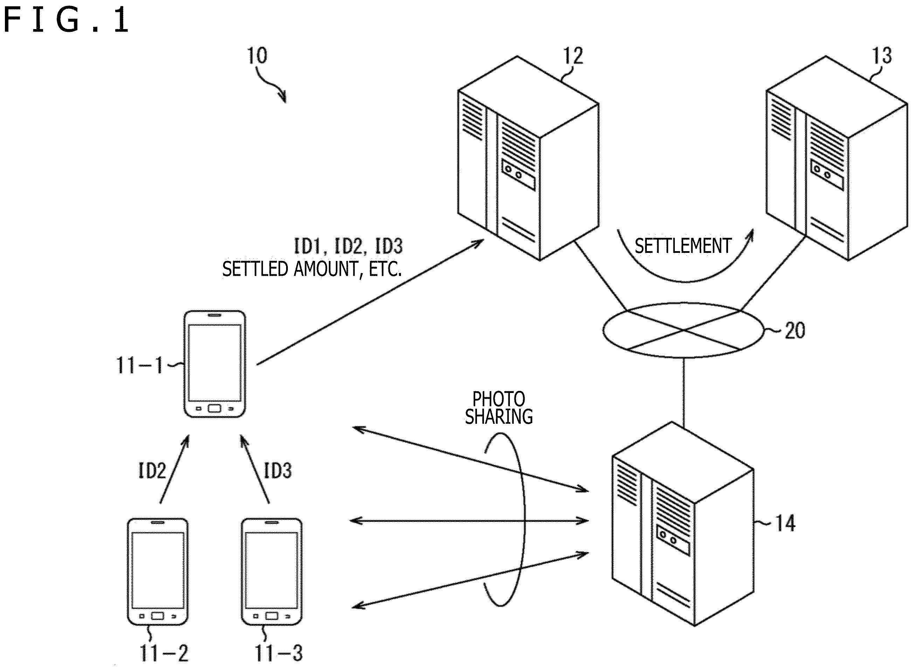

FIG. 1 depicts a configurational example of the settlement system to which the present technology is applied.

The settlement system 10 has mobile terminal apparatuses 11-1 through 11-3, a mediation server 12, a settlement server 13, and a photo-sharing server 14.

The mobile terminal apparatuses 11-1 through 11-3 are each configured as a multifunctional mobile telephone (a so-called smartphone) or a tablet terminal, for example. The mobile terminal apparatuses 11-1 through 11-3 mutually execute near-field wireless communication such as NFC (Near Field Communication). Here, it is assumed that the near-field wireless communication be non-contact communication in which the distance between communicating apparatuses is within 10 centimeters.

The mobile terminal apparatuses 11-1 through 11-3 each has a unique settlement ID for executing the settlement using electronic value. The settlement ID is the identification information related with the settlement related with each of the mobile terminal apparatuses 11-1 through 11-3. The electronic value is data having the value of currency or the value as like as currency.

It should be noted that the settlement ID may be any that there is no fear of name identification and can assure anonymity. The settlement ID may be configured by unique numbers having a predetermined number of digits or may be generated every time as with one-time passwords, for example.

Further, by executing wireless communication with a base station not depicted, the mobile terminal apparatuses 11-1 through 11-3 execute communication with the mediation server 12, the settlement server 13, and the photo-sharing server 14 via a network 20 like the Internet.

The mediation server 12, the settlement server 13, and the photo-sharing server 14 are interconnected via the network 20 like the Internet.

The mediation server 12 stores the specific information for specifying the users of the mobile terminal apparatuses 11-1 through 11-3 by relating the specific information with the settlement IDs of the mobile terminal apparatuses 11-1 through 11-3. Here, the specific information is the mail address and the account information of a predetermined SNS (Social Networking Service) of each of the users. In this example, the mail address is the mail address of the mobile terminal apparatus owned by that user, but not limited thereto.

The settlement server 13 executes the settlement processing using electronic value on the basis of the settlement ID of each of the mobile terminal apparatuses 11-1 through 11-3.

The photo-sharing server 14 provides a Web service to make various kinds of data such as photographs (image data) stored in a shared folder accessible only by particular users be shared therebetween. The data to be stored in the shared folder is not only still image data but also moving image data or audio data.

### - Overview of settlement processing

The following describes an overview of the settlement processing to be executed in the settlement system 10. Here, a case in which the users of the mobile terminal apparatuses 11-1 through 11-3 pay food and drinking fee at a certain restaurant.

First, of the mobile terminal apparatuses 11-1 through 11-3, the mobile terminal apparatus 11-1 becomes a host terminal so as to start payment application (hereafter referred to as a bill-splitting app). The mobile terminal apparatus 11-1 accepts the input of each user with regard to the food and drinking fee and the payee thereof.

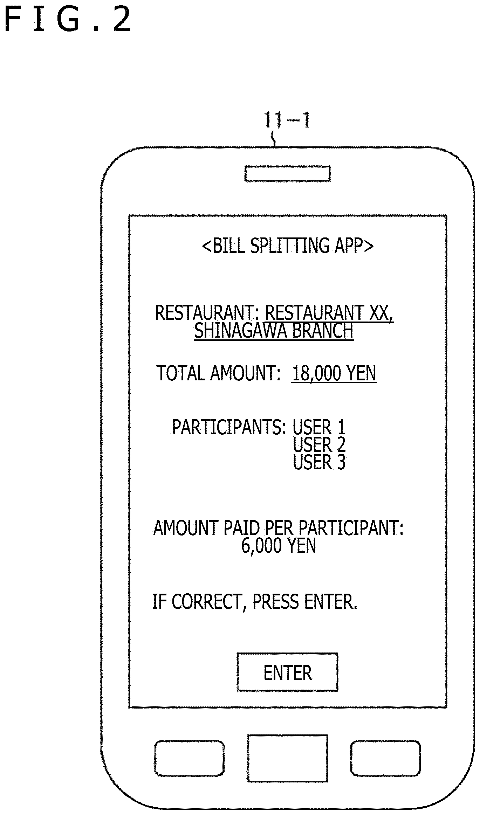

FIG. 2 depicts a screen display example of the bill-splitting app displayed on the mobile terminal apparatus 11-1.

In the example illustrated in FIG. 2, "Restaurant XX, Shinagawa branch" is inputted as "Restaurant" to which payment for the food and drinking fee is done in the bill-splitting app and "18,000 (yen)" is inputted as "Total Amount" that is the food and drinking fee.

On the other hand, of the mobile terminal apparatuses 11-1 through 11-3, the mobile terminal apparatuses 11-2 and 11-3 becomes guest terminals and are held over the mobile terminal apparatus 11-1 that is the host terminal by each user.

At this time, near-field wireless communication is executed between the mobile terminal apparatuses 11-1 and 11-2 and between the mobile terminal apparatuses 11-1 and 11-3, thereby sending the settlement IDs (ID2 and ID3) of the mobile terminal apparatuses 11-2 and 11-3 to the mobile terminal apparatus 11-1. It should be noted that, even if any of the guest terminals (the mobile terminal apparatuses 11-2 and 11-3) are held over the host terminal (mobile terminal apparatus 11-1) two or more times, it is assumed that only one send/receive operation for the settlement ID of each guest terminal be executed.

The mobile terminal apparatus 11-1 sends the settlement ID (ID1) thereof and the settlement IDs (ID2 and ID3) of the mobile terminal apparatuses 11-2 and 11-3 to the mediation server 12.

At this time, as illustrated in FIG. 2, "User 1," "User 2," and "User 3" indicative of the users of the mobile terminal apparatuses 11-1 through 11-3 respectively are displayed as "Participants" who pay the food and drinking fees on the screen of the bill-splitting app.

In FIG. 2, when the enter button displayed at the bottom of the screen of the bill-splitting app is clicked by the user of the mobile terminal apparatus 11-1, the mobile terminal apparatus 11-1 sends, to the mediation server 12, the information for specifying a food and drinking fee (an amount of settlement money) and the restaurant to which the payment is done as the settlement conditions related with the settlement by linking this information with the settlement IDs (ID1, ID2, and ID3) sent before.

The mediation server 12 sends the settlement IDs (ID1, ID2, and ID3) and the settlement conditions received from the mobile terminal apparatus 11-1 to the settlement server 13.

On the basis of the settlement IDs and settlement conditions sent received from the mediation server 12, the settlement server 13 executes settlement processing. To be more specific, an amount 6,000 yen obtained by equally splitting an amount 18,000 yen that is the amount of settlement money by three participants is subtracted from the electronic value for the settlement ID of each participant, the result thereof being paid to the specified restaurant. That is, split payment is done.

Further, the mediation server 12 sends the user specific information (the mail address for example) stored as related with the settlement ID linked to the settlement conditions of the executed settlement processing to the photo-sharing server 14 and, at the same time, requests the photo-sharing server 14 for the creation of a shared folder.

On the basis of the request from the mediation server 12, the photo-sharing server 14 creates a shared folder that is accessible only by the mobile terminal apparatuses 11-1 through 11-3 having the settlement IDs linked to the settlement conditions of the executed settlement processing. Further, the photo-sharing server 14 sends, from the mediation server 12, mail messages including the access information (to be more specific, URLs) for accessing the created shared folder to the mail address of each user. The shared folder stores the data (still image data and so on) that is uploaded from the mobile terminal apparatuses 11-1 through 11-3, the data being linked to each settlement ID. It should be noted that the mediation server 12 may not send mail addresses to the photo-sharing server 14, thereby only executing a request for the creation of a shared folder. In this case, the photo-sharing server 14 creates a shared folder on the basis of the request from the mediation server 12 and sends the URL thereof to the mediation server 12. Then, the mediation server 12 sends the mail including the URL to the mail address of each user. Consequently, the possibility of the leakage of the user specific information (the mail address) can be lowered, thereby strengthening security.

The of each of the mobile terminal apparatuses 11-1 through 11-3 can upload photographs (still image data) shot at the time of dining at the above-mentioned restaurant and view these photographs by accessing the URL included in the mail from the photo-sharing server 14. That is, the users can share photographs.

As described above, the users can execute the adjustment of food and drinking fees at a restaurant simply and without waste and, at the same time, share photographs without mutually giving personal information. It should be noted that each user can share moving images and audio in addition to photographs by uploading moving image data or audio data in addition to still image data.

The following describes embodiments of the present technology.

### 2. First embodiment

### - Configurational example of hardware mobile terminal apparatuses

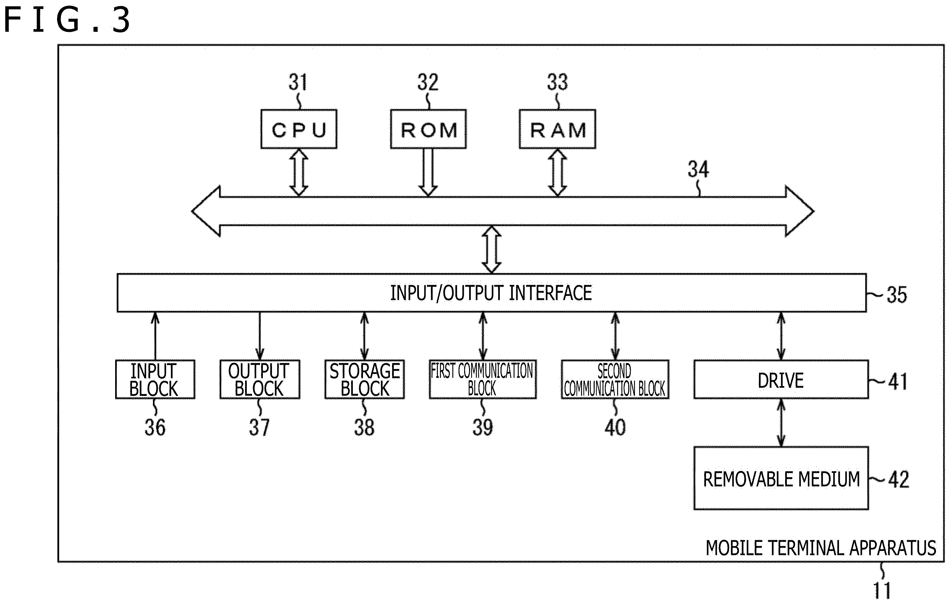

Referring to FIG. 3, examples of hardware configurations of the mobile terminal apparatuses 11-1 through 11-3 are described. It should be noted that, in what follows, in a case where there is no need to distinguish the mobile terminal apparatuses 11-1 through 11-3 from each other, these terminal apparatuses are generically referred to as the mobile terminal apparatus 11. Further, in the embodiments of the present technology, the number of mobile terminal apparatus 11 is three but not limited thereto as long as the number is plural.

In FIG. 3, a CPU (Central Processing Unit) 31 executes various types of processing operations as instructed by programs stored in a ROM (Read Only Memory) 32 or programs loaded in a RAM (Random Access Memory) 33. The RAM 33 also appropriately stores data necessary for the CPU 31 to execute various types of processing operations.

The CPU 31, the ROM 32, and RAM 33 are interconnected via a bus 34. An input/output interface 35 is also connected to this bus 34.

An input block 36, an output block 37, a storage block 38, a first communication block 39, and a second communication block 40 are connected to the input/output interface 35.

The input block 36 includes keys, buttons, a touch panel, a microphone, and so on. The output block 37 includes a display using LCD (Liquid Crystal Display) or organic EL (Electro-luminescence), a speaker, and so on. The storage block 38 includes a hard disc drive or the like. The first communication block 39 is made up of an antenna for executing near-field wireless communication and so on. The second communication block 40 includes an antenna for executing wireless communication and so on.

Information unique to the mobile terminal apparatus 11 for authenticating the mobile terminal apparatus 11 or the like is stored in the storage block 38.

The first communication block 39 executes near-field wireless communication with other mobile terminal apparatuses 11 and the second communication block 40 executes wireless communication processing with a base station not depicted.

A drive 41 is also connected to the input/output interface 35 as required on which a removable medium 42 including a semiconductor memory or the like is loaded as appropriate. A computer program read from this removable medium is installed in the storage block 38 as required.

### - Configurational example of hardware of mediation server

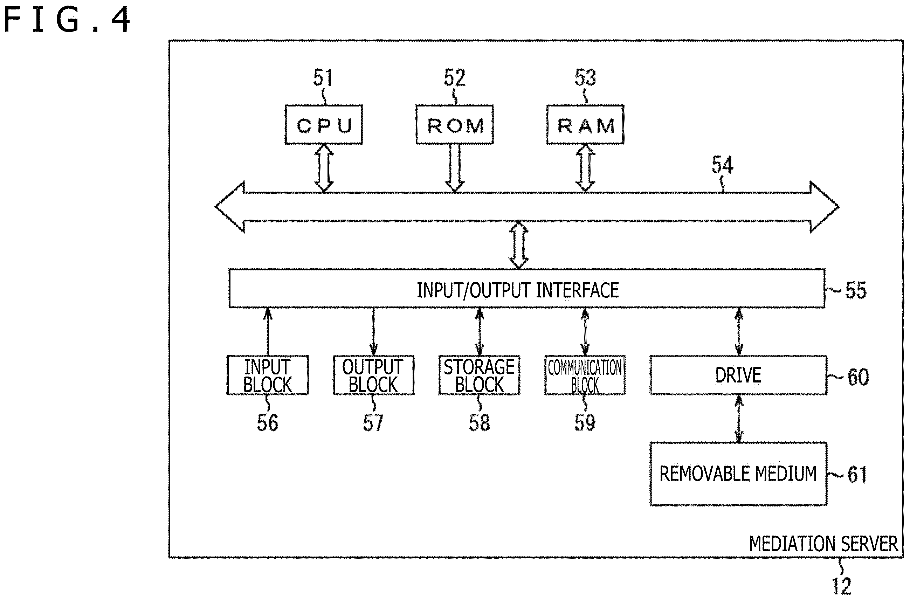

Next, with reference to FIG. 4, a configurational example of the hardware of the mediation server 12 is described.

In FIG. 4, a CPU 51 executes various types of processing operations as instructed by programs stored in a ROM 52 or programs loaded in a RAM 53. The RAM 53 also appropriately stores data necessary for the CPU 51 to execute various types of processing operations.

The CPU 51, the ROM 52, and RAM 53 are interconnected via a bus 54. An input/output interface 55 is also connected to this bus 54.

An input block 56, an output block 57, a storage block 58, and a communication block 59 connected to the input/output interface 55.

The input block 56 includes a keyboard, a mouse, and so on. The output block 57 includes a display using LCD or CRT (Cathode Ray Tube) or the like, a speaker, and so on. The storage block 58 is made up of a hard disc drive or the like. The communication block 59 includes a modem, a terminal adaptor, and so on.

The communication block 59 executes communication processing via a network such as the Internet.

A drive 60 is also connected to the input/output interface 55 as required on which a removable medium 61 including a magnetic disc, an optical disc, a magnetooptical disc, or a semiconductor memory is loaded as appropriate. A computer program read from this removal medium is installed in the storage block 58 as required.

It should be noted that the hardware configurations of the settlement server 13 and the photo-sharing server 14 are similar to the hardware configuration of the mediation server 12 described with reference to FIG. 4, so that the description of the hardware configurations of the settlement server 13 and the photo-sharing server 14 is skipped.

The following describes the functional configurations of the mobile terminal apparatus 11, the mediation server 12, the settlement server 13, and the photo-sharing server 14.

### - Example of functional configuration of mobile terminal apparatus

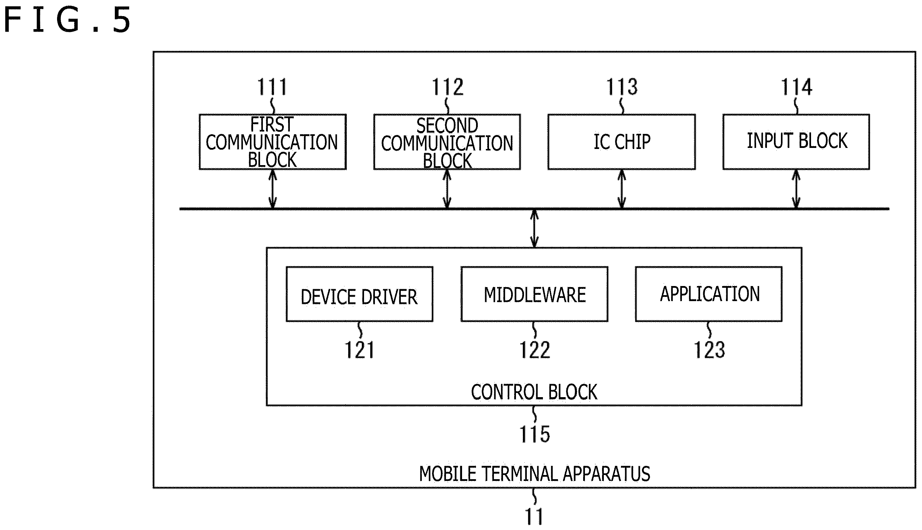

FIG. 5 depicts a diagram illustrating an example of the functional configuration of the mobile terminal apparatus 11.

The mobile terminal apparatus 11 in FIG. 5 includes a first communication block 111, a second communication block 112, an IC chip 113, an input block 114, and a control block 115.

The first communication block 111 corresponds to the first communication block 39 illustrated in FIG. 3 and executes communication with the mediation server 12, the settlement server 13, and the photo-sharing server 14 by executing wireless communication with a base station not depicted.

The second communication block 112 corresponds to the second communication block 40 illustrated in FIG. 3 and has an antenna for executing near-field wireless communication with other mobile terminal apparatuses 11, thereby executing near-field wireless communication with other mobile terminal apparatuses 11.

The IC chip 113 has a memory area and services such electronic money service for example are registered in a predetermined area in this memory area.

In addition, the IC chip 113 stores the secure data for use in the execution of the processing related with settlement. The settlement ID that is the information unique to the mobile terminal apparatus 11 is allocated to the IC chip 113. This setup allows the reading of the settlement ID in a secure manner.

The input block 114 corresponds to the input block 36 illustrated in FIG. 3 and includes keys, buttons, a touch panel, a microphone, and so on, thereby accepting an input operation done by the user.

The control block 115 corresponds to the CPU 31 illustrated in FIG. 3 and controls the first communication block 111, the second communication block 112, and the IC chip 113. In addition, the control block 115 realizes a device driver 121, middleware 122, and an application 123.

The device driver 121 controls devices such as the first communication block 111, the second communication block 112, and the IC chip 113.

The middleware 122 has API (Application Program Interface) and provides predetermined functions to the application 123. For example, the middleware 122 functions related with settlement and functions for accessing the IC chip 113 to the application 123.

The application 123 executes the processing corresponding to an operation done by the user on the mobile terminal apparatus 11. For example, the application 123 is the bill-splitting app and executes the processing related with settlement.

### - Example of functional configuration of mediation server

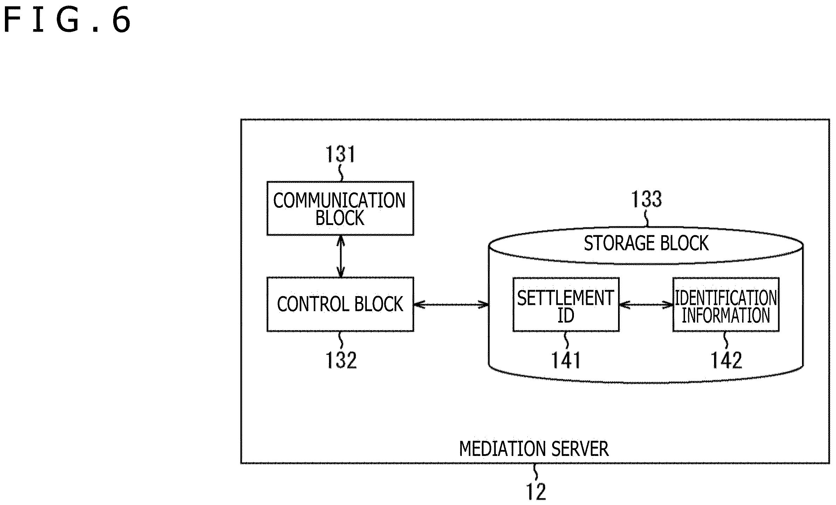

FIG. 6 depicts a diagram illustrating an example of the functional configuration of the mediation server 12.

The mediation server 12 illustrated in FIG. 6 includes a communication block 131, a control block 132, and a storage block 133.

The communication block 131 corresponds to the communication block 59 in FIG. 4 and executes communication with the mobile terminal apparatus 11 or other servers (the settlement server 13 and the photo-sharing server 14) via a network such as the Internet.

The control block 132 corresponds to the CPU 51 illustrated in FIG. 4 and controls the communication block 131 and the storage block 133.

The storage block 133 corresponds to the ROM 52 or the RAM 53 illustrated in FIG. 4 and stores the programs and data necessary for executing various types processing operations. In addition, the storage block 133 relates a settlement ID 141 of the mobile terminal apparatus 11 owned by the user with specific information 142 (mail address, SNS account, and so on) for specifying that user and stores the related settlement ID 141 and specific information.

Further, the storage block 133 stores a list on which the settlement IDs and mail addresses of restaurants and the like to which payments are done are related with each other.

### - Example of functional configuration of settlement server

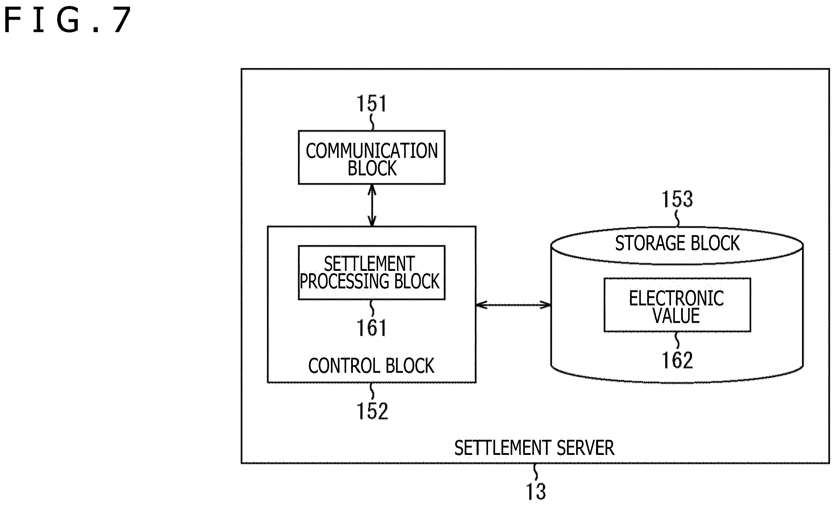

FIG. 7 depicts a diagram illustrating an example of the functional configuration of the settlement server 13.

The settlement server 13 illustrating in FIG. 7 includes a communication block 151, a control block 152, and a storage block 153.

The communication block 151 executes communication with the mobile terminal apparatus 11 and other servers (the mediation server 12 and the photo-sharing server 14) via a network such as the Internet.

The control block 152 controls the communication block 151 and the storage block 153. In addition, the control block 152 realizes a settlement processing block 161. The settlement processing block 161 executes settlement processing on the basis of the settlement conditions (amounts of settlement and so on) and settlement ID of the mobile terminal apparatus 11.

The storage block 153 stores the programs and data necessary for executing various types of processing operations. In addition, the storage block 153 stores an electronic value 162 for use in settlement processing for each settlement ID. In this case, the electronic value 162 is data indicative of the balance of an account in a financial organization.

As described above, an electronic money service that is provided by a system in which the electronic value is held in the so-called cloud is referred to as an electronic money service of cloud value type.

### - Example of functional configuration of photo-sharing server

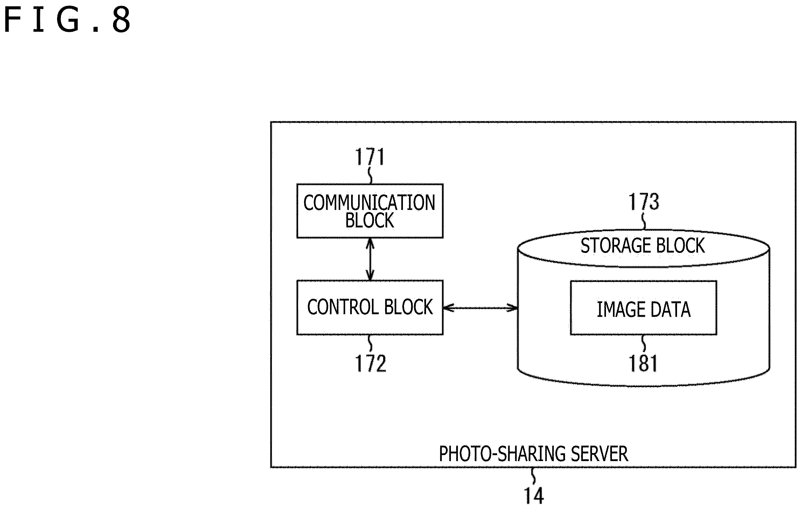

FIG. 8 depicts an example of the functional configuration of the photo-sharing server 14.

The photo-sharing server 14 illustrated in FIG. 8 includes a communication block 171, a control block 172, and a storage block 173.

The communication block 171 executes communication with the mobile terminal apparatus 11 and other servers (the mediation server 12 and the settlement server 13) via a network such as the Internet.

The control block 172 controls the communication block 171 and the storage block 173.

The storage block 173 stores programs and data necessary for executing various types of processing operations. In addition, a shared folder accessible from only particular users is created in the storage block 173. This shared folder stores image data 181 by these users. That is, the photo-sharing server 14 provides a Web service that allows the image data 181 stored in shared folder to be shared among the particular users. It should be noted that the shared folder that is created in the storage block 173 may also store moving image data and audio data in addition to the image data 181 that is still image data.

### - Flow of settlement processing in settlement system

The following describes a flow of the settlement processing that is executed in the settlement system 10. Here, an example is also used in which the users of the mobile terminal apparatuses 11-1 through 11-3 pay food and drinking fees at a certain restaurant.

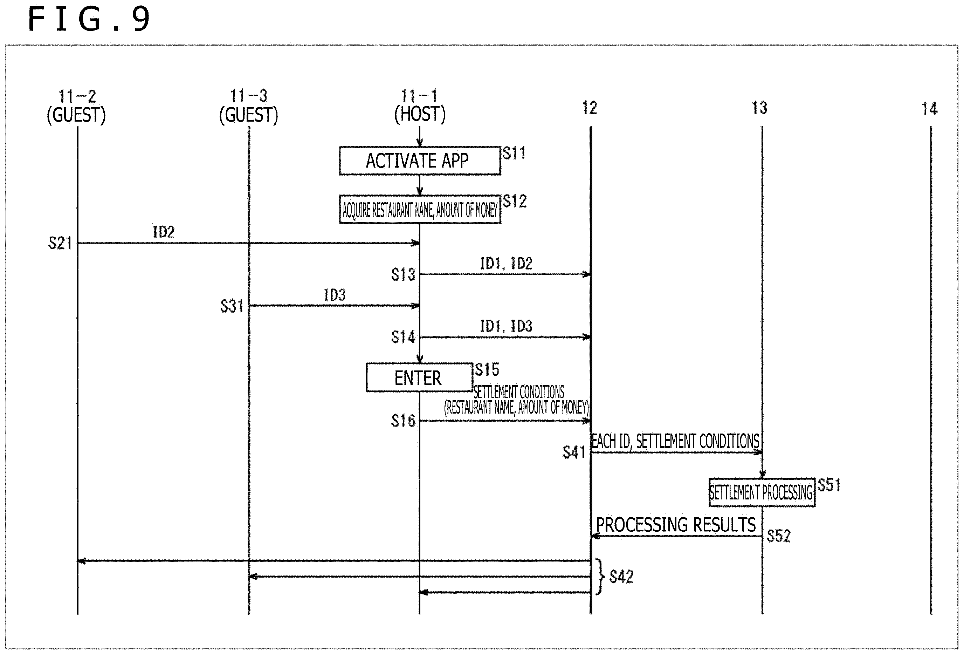

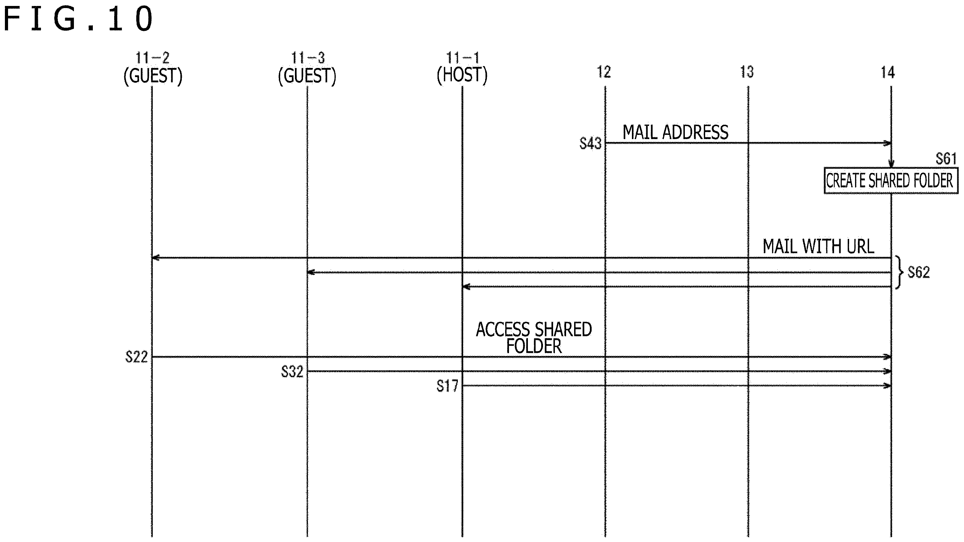

FIG. 9 and FIG. 10 are flowcharts indicative of the flows of the settlement processing that is executed in the settlement system 10.

When an operation is executed by the user on the mobile terminal apparatus 11-1 for activating the bill-splitting app, the mobile terminal apparatus 11-1 activates the bill-splitting app in step S11. At this moment, the mobile terminal apparatus 11-1 becomes the host terminal and the mobile terminal apparatuses 11-2 and 11-3 become the guest terminals.

On the screen (FIG. 2) of the bill-splitting app, when the restaurant name (to which the food and drinking fee is paid) and the amount of money (the food and drinking fee) are inputted by the user of the mobile terminal apparatus 11-1, the input block 114 of the mobile terminal apparatus 11-1 acquires the inputted restaurant name and amount of money in step S12. That is, the input block 114 of the mobile terminal apparatus 11-1 functions as an acquisition block for acquiring the settlement conditions.

First, the mobile terminal apparatus 11-2, a guest terminal, is held by the user thereof over the mobile terminal apparatus 11-1 that is the host terminal, the first communication block 111 of the mobile terminal apparatus 11-2 sends the settlement ID (ID2) to the mobile terminal apparatus 11-1 by near-field wireless communication in step S21.

When the first communication block 111 of the mobile terminal apparatus 11-1 acquires the settlement ID (ID2) from the mobile terminal apparatus 11-2 by near-field wireless communication, then, in step S13, the second communication block 112 of the mobile terminal apparatus 11-1 sends the settlement ID (ID1) of the mobile terminal apparatus 11-1 and the settlement ID (ID2) of the mobile terminal apparatus 11-2 to the mediation server 12. The communication block 131 of the mediation server 12 receives the settlement IDs (ID1 and ID2) from the mobile terminal apparatus 11-1.

Next, when the mobile terminal apparatus 11-3 that is a guest terminal is held by the user thereof over the mobile terminal apparatus 11-1 that is the host terminal, the first communication block 111 of the mobile terminal apparatus 11-3 sends the settlement ID (ID3) to the mobile terminal apparatus 11-1 by near-field wireless communication in step S31.

When the first communication block 111 of the mobile terminal apparatus 11-1 acquires the settlement ID (ID3) from the mobile terminal apparatus 11-3 by near-field wireless communication, the second communication block 112 of the mobile terminal apparatus 11-1 sends the settlement ID (ID1) of the mobile terminal apparatus 11-1 and the settlement ID (ID3) of the mobile terminal apparatus 11-3 to the mediation server 12 in step S14. The communication block 131 of the mediation server 12 receives the settlement IDs (ID1 and ID3) from the mobile terminal apparatus 11-1.

In the description so far, the restaurant name and the amount of money are inputted by the user of the mobile terminal apparatus 11-1; however, it is also practicable that the user of the mobile terminal apparatus 11-2 or the mobile terminal apparatus 11-3 inputs the restaurant name and the amount of money. In this case, the first communication block 111 of the mobile terminal apparatus 11-1 functions as the acquisition block for acquiring the settlement conditions, thereby acquiring the restaurant name and the amount of money from the mobile terminal apparatus 11-2 and the mobile terminal apparatus 11-3 by near-field wireless communication.

Now, in step S15, when the enter button displayed on the bill-splitting app is clicked by the user of the mobile terminal apparatus 11-1, then, in step S16, the second communication block 112 of the mobile terminal apparatus 11-1 links the restaurant name and the amount of money that are the settlement conditions with the settlement IDs (ID1, ID2, and ID3), thereby sending the linked information to the mediation server 12. The communication block 131 of the mediation server 12 receives the settlement conditions from the mobile terminal apparatus 11-1. It should be noted that it is also practicable to send the settlement IDs (ID1, ID2, and ID3) to the mediation server 12 all at once when the enter button on the bill-splitting app is clicked rather than sending the settlement IDs (ID1, ID2, and ID3) to the mediation server 12 every time the mobile terminal apparatus 11-2 and the mobile terminal apparatus 11-3 are held over the mobile terminal apparatus 11-1.

On the basis of the restaurant name from the mobile terminal apparatus 11-1, the mediation server 12 identifies the settlement ID of that restaurant from the list of the settlement IDs of restaurants and so on.

In step S41, the communication block 131 of the mediation server 12 sends the specified restaurant settlement ID and the settlement IDs (ID1, ID2, and ID3) and settlement conditions sent from the mobile terminal apparatus 11-1 to the settlement server 13.

Receiving the settlement IDs (ID1, ID2, and ID3) and the settlement conditions, the settlement server 13 relates a transaction ID indicative of the settlement processing of this time with the settlement conditions. That is, the transaction ID is linked to the settlement IDs (ID1, ID2, and ID3).

Then, in step S51, the settlement processing block 161 of the settlement server 13 executes the settlement processing on the basis of each settlement ID and settlement conditions sent from the mediation server 12. At this moment, the settlement processing block 161 executes the settlement processing by use of the electronic value 162 for each settlement ID held in the storage block 153.

When the settlement processing ends, the communication block 151 of the settlement server 13 sends the results of the settlement processing for each settlement ID to the mediation server 12 in step S52.

In step S42, the communication block 131 of the mediation server 12 sends, as a mail message, the processing results for each settlement ID sent from the settlement server 13 to each of the mobile terminal apparatuses 11-1 through 11-3 by use of the mail addresses thereof stored in the storage block 133 as specific information. Further, the communication block 131 of the mediation server 12 sends the processing results of the entire settlement processing of this time to the mail address of the restaurant to which the payment is made.

The second communication block 112 of each of the mobile terminal apparatuses 11-1 through 11-3 receives the settlement processing as a mail message from the mediation server 12. The user of each of the mobile terminal apparatuses 11-1 through 11-3 can confirm whether the settlement processing has been correctly executed by reading the received mail message indicative of the settlement processing. It should be noted that the mail message indicative of the processing results may be sent only to the mobile terminal apparatus 11-1 that is the host terminal.

Now, in step S43 illustrated in FIG. 10, the communication block 131 of the mediation server 12 sends the transaction ID of the settlement processing of this time and the mail address (the mail address to which the processing results are sent) related with the settlement IDs (ID1, ID2, and ID3) linked to this transaction ID to the photo-sharing server 14.

In step S61, the control block 172 of the photo-sharing server 14 creates, in a predetermined area of the storage block 173, a shared folder accessible only from the mobile terminal apparatuses 11-1 through 11-3 having the settlement IDs linked to the transaction ID sent from the mediation server 12.

Further, in step S62, the communication block 171 of the photo-sharing server 14 sends the mail including the URL for accessing the created shared folder to each of the mobile terminal apparatuses 11-1 through 11-3 by use of the mail addresses related with the settlement IDs sent from the mediation server 12.

In the mobile terminal apparatus 11-1, when the second communication block 112 receives the mail from the photo-sharing server 14 and the URL included in this mail is selected by the user, the second communication block 112 of the mobile terminal apparatus 11-1 accesses the shared folder of the photo-sharing server 14 in step S17.

Further, when the second communication block 112 receives the mail from the photo-sharing server 14 and the URL included in this mail is selected by the user in the mobile terminal apparatus 11-2, then, in step S22, the second communication block 112 of the mobile terminal apparatus 11-2 accesses the shared folder of the photo-sharing server 14.

Still further, in the mobile terminal apparatus 11-3, when the second communication block 112 receives the mail from the photo-sharing server 14 and the URL included in this mail is selected by the user, then, in step S32, the second communication block 112 of the mobile terminal apparatus 11-3 accesses the shared folder of the photo-sharing server 14.

Consequently, the user of each of the mobile terminal apparatuses 11-1 through 11-3 can upload the image data taken in an event in which the user participated and view the uploaded imaged. That is, photographs can be shared.

It should be noted that the shared folder may be created in the photo-sharing server 14 with a timing that the guest terminals (the mobile terminal apparatuses 11-2 and 11-3) are held over the host terminal (the mobile terminal apparatus 11-1) and, at the same time, the image data recorded to the mobile terminal apparatuses 11-1 through 11-3 may be uploaded.

According to the processing described above, unlike services with which the balance of electronic money can be transferred to the electronic money of other persons, since no handling fee is charged at the time of use, the user can use the services without hesitation and the adjustment of payment for the participation fees in a participating event can be executed with simplicity and without waste.

In the past, photographs taken in a participating event are shared among the participants by uploading the photographs to an SNS or the like.

However, some participants are reluctant to tell others the personal information such as mail address and SNS account information.

Therefore, according to the processing described above, photographs can be shared at a participating event without sharing the personal information among participants.

In the description done above, the settlement system for providing cloud value type electronic money services has been described as the first embodiment.

With the settlement system for providing cloud value type electronic money services, the electronic value is held on the cloud (the settlement server 13 in the example described above); however, it is also practicable to hold electronic value for each of the mobile terminal apparatuses 11.

As described above, the electronic money services in which electronic value is held in each of the mobile terminal apparatuses 11 are referred to as the electronic money services of local value type.

### 3. Second embodiment

Therefore, the following describes a settlement system for providing the electronic money services of local value type as the second embodiment.

### - Example of functional configuration of mobile terminal apparatuses

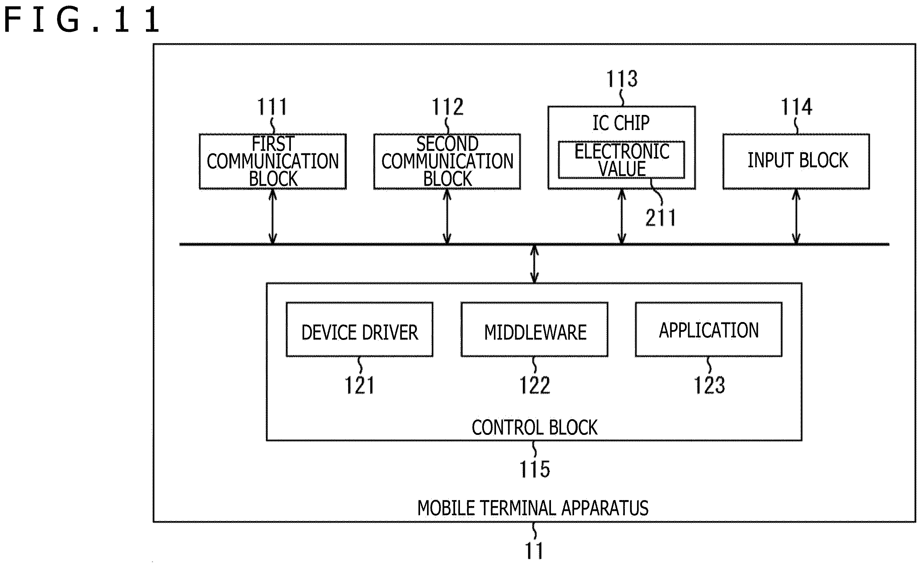

FIG. 11 depicts a diagram illustrating an example of the functional configuration of the mobile terminal apparatus 11 in the present embodiment.

The mobile terminal apparatus 11 illustrated in FIG. 11 is different from the mobile terminal apparatus 11 illustrated in FIG. 5 in that the IC chip 113 holds an electronic value 211 for each mobile terminal apparatus 11. In this case, the electronic value 211 is the data indicative of the balance of the amount of money paid by the user.

It should be noted that, in the present embodiment, the functional configurations of the mediation server 12, the settlement server 13, and the photo-sharing server 14 are similar to the configurations described with reference to FIG. 6 through FIG. 8. The electronic value 162 for each settlement ID of the mobile terminal apparatus 11 stored in the storage block 153 of the settlement server 13 is updated in accordance with the electronic value 211 for each mobile terminal apparatus 11; however, it is also practicable not to store the electronic value 162 for each settlement ID of the mobile terminal apparatus 11 into the storage block 153 of the settlement server 13.

### - Flow of settlement processing in settlement system

The following describes a flow of the settlement processing in the settlement system 10 of the present embodiment.

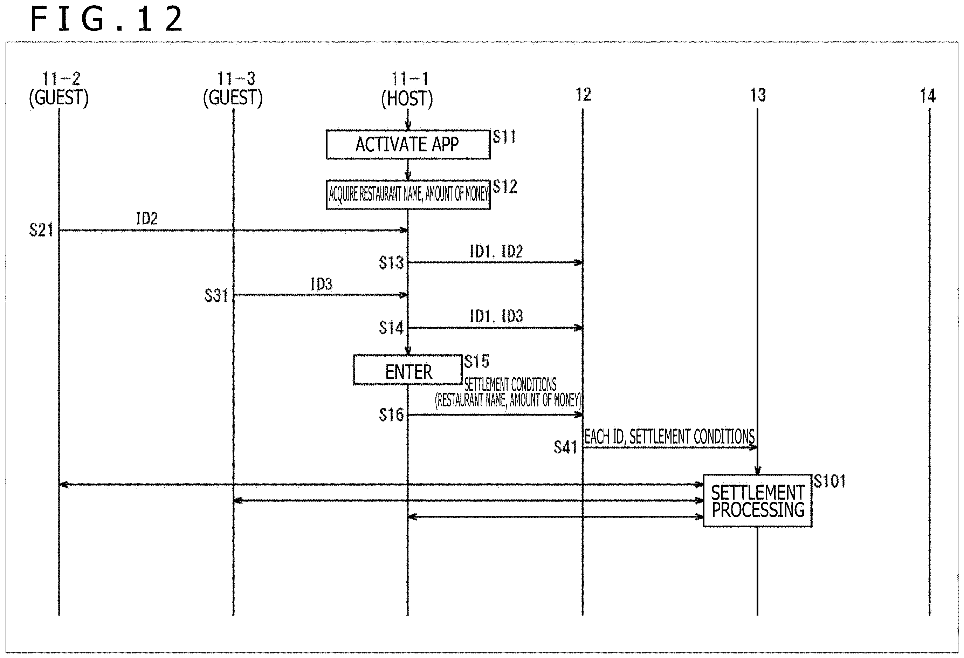

FIG. 12 depicts a flowchart indicative of a flow of the settlement processing in the settlement system 10 of the present embodiment.

It should be noted that, in FIG. 12, the similar processing to the processing illustrated in FIG. 9 is executed up to step S41. Further, in FIG. 12, the similar processing to the processing illustrated in FIG. 10 is executed subsequent to step S101.

In step S101, the settlement processing block 161 of the settlement server 13 executes settlement processing on the basis of each settlement ID and the settlement conditions sent from the mediation server 12.

At this time, on the basis of the control by the control block 152, the communication block 151 of the settlement server 13 sends a mail message including the URL for activating the browser-cooperated middleware for executing settlement processing to the mobile terminal apparatuses 11-1 through 11-3. In the mobile terminal apparatuses 11-1 through 11-3, when the URL included in the mail message is selected, the browser-cooperated middleware is activated, thereby executing an electronic value subtraction session. The browser-cooperated middleware is the middleware that operates integrally with a browser.

### - Electronic value subtraction session

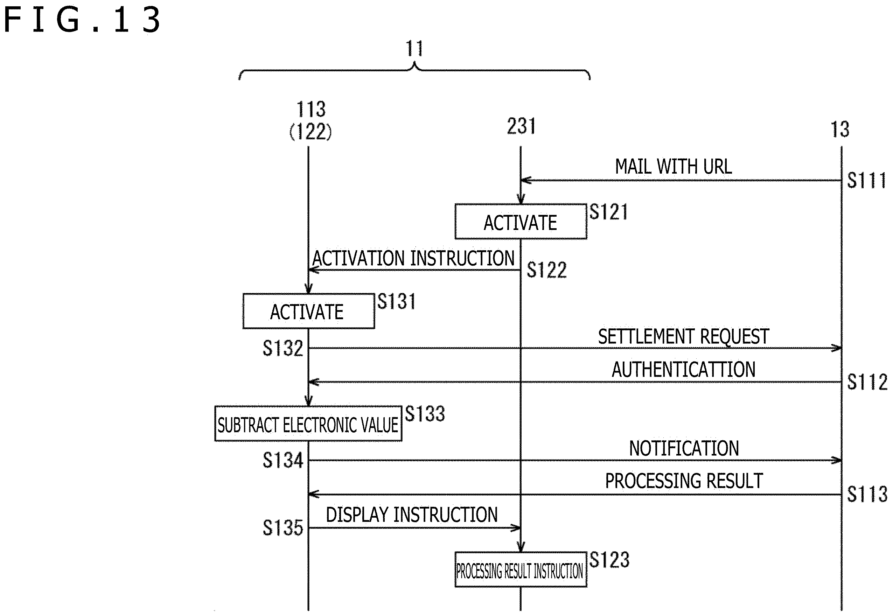

The following describes details of an electronic value subtraction session with reference to the flowchart illustrated in FIG. 13. It should be noted that the processing illustrated in FIG. 13 is executed between the mobile terminal apparatus 11 and the settlement server 13; however, it is also practicable for the mediation server 12 to mediate this processing between the mobile terminal apparatus 11 and the settlement server 13.

In step S111, the communication block 151 of the settlement server 13 sends a mail message including the URL for activating the browser-cooperated middleware for executing an electronic value subtraction session to the mobile terminal apparatus 11.

In the mobile terminal apparatus 11, when the URL included in the mail message from the settlement server 13 is selected by the user, the browser 231 is activated in step S121, thereby displaying a Web page for guiding the activation of the browser-cooperated middleware. This Web page is written with a markup language such as HTML (HyperText Markup Language) for example.

In step S122, when the user of the mobile terminal apparatus 11 executes a predetermined operation on the browser 231, the browser 231 instructs the middleware 122 to activate the IC chip 113.

When the activation is directed by the browser 231, the IC chip 113 is activated in step S131.

When the IC chip 113 is activated, the middleware 122 requests the settlement server 13 for the execution of settlement in cooperation with the IC chip 113 in step S132. The settlement request includes the authentication information for authenticating the mobile terminal apparatus 11.

In step S112, the control block 152 of the settlement server 13 authenticates the mobile terminal apparatus 11 on the basis of the authentication information included in the settlement request received from the mobile terminal apparatus 11.

In a case where the authentication of the mobile terminal apparatus 11 is successful, then, in step S133, the IC chip 113 subtracts the amount of settlement money from the electronic value 211 held therein.

When the subtraction of the electronic value 211 is successful, then, in step S134, the middleware 122 notifies, in cooperation with the IC chip 113, the settlement server 13 of the successful subtraction of the electronic value 211.

Receiving the notification from the mobile terminal apparatus 11, the communication block 151 of the settlement server 13 sends the processing results of the settlement processing to the mobile terminal apparatus 11 in step S113.

In step S135, the IC chip 113 instructs the browser 231 to display the processing results on the basis of the processing results received from the settlement server 13.

Then, in step S123, the browser 231 displays the processing results of the settlement processing.

As described above, a subtraction session of electronic value is executed.

According to the processing described above, even with a settlement system providing the electronic money services of local value type, the user can execute the adjustment of participation fee in a participated event with simplicity and without waste and share photographs at the participating event without disclosing the personal information to other participants.

In the description done above, the mediation server 12, the settlement server 13, and the photo-sharing server 14 have been described as being configured in a discrete manner; however, it is also practicable to configure these servers as integrated into one single server.

### 4. Third embodiment

Therefore, in what follows, a settlement system in which the mediation server 12, the settlement server 13, and the photo-sharing server 14 are integrated into one integrated server as the third embodiment will be described.

### - Example of functional configuration of integrated server

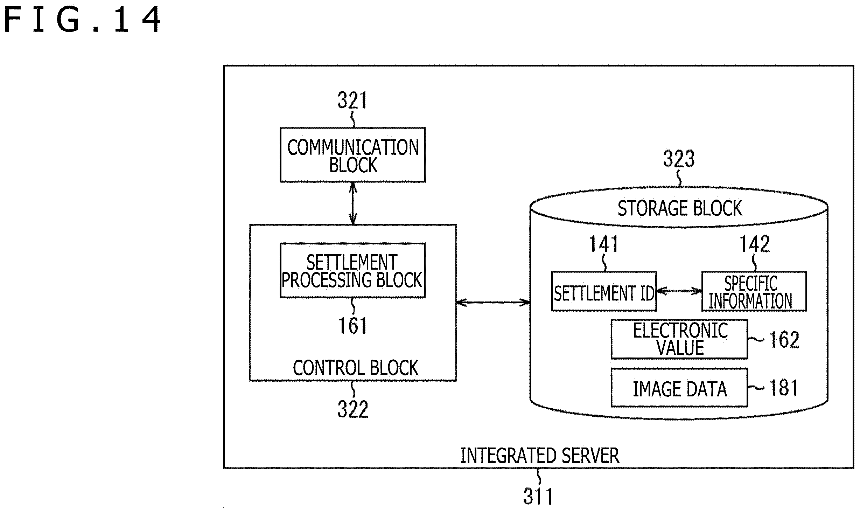

FIG. 14 depicts a diagram illustrating an example of a functional configuration of the integrated server in the present embodiment.

An integrated server 311 depicted in FIG. 14 includes a communication block 321, a control block 322, and a storage block 323.

The communication block 321 executes communication with the mobile terminal apparatus 11 via a network such as the Internet.

The control block 322 controls the communication block 321 and the storage block 323. In addition, the control block 322 realizes the settlement processing block 161.

The storage block 323 stores programs and data necessary for the execution of various types of processing operations.

The storage block 323 stores the above-mentioned settlement ID 141 and the above-mentioned specific information 142 by relating these items of information with each other. In addition, the storage block 323 stores the electronic value 162 for each settlement ID. That is, the settlement system including the integrated server 311 illustrated in FIG. 14 provides the electronic money services of cloud value type. Further, in the storage block 323, a shared folder accessible only by particular users is created. This shared folder stores image data 181 by these users.

It should be noted that, in the present embodiment, the functional configuration of the mobile terminal apparatus 11 is the similar to the functional configuration described with reference to FIG. 5; however, in a case where the settlement system including the integrated server 311 illustrated in FIG. 14 provides the electronic money services of local value type, the functional configuration of the mobile terminal apparatus 11 takes the configuration as described with reference to FIG. 11.

In the settlement system having the configuration described above, the user also can execute the adjustment of the participation fee at a participating event with simplicity and without waste and share photographs at the participating event without disclosing personal information to other participants.

In the description done above, a configuration in which the mediation server 12, the settlement server 13, and the photo-sharing server 14 are integrated into one integrated server 311 has been described. It is also practicable to integrate any two servers of the mediation server 12, the settlement server 13, and the photo-sharing server 14 into one server and discretely configure the remaining one server.

### 5. Application examples of present technology

In the embodiments described above, it is assumed that the mobile terminal apparatuses 11-2 and 11-3 operate as guest terminals and each guest terminal may only be configured to be able to acquire a settlement ID; That is, an IC card or a credit card having an IC chip, for example. In this case, uploading or browsing of image data is separately executed by use of a mobile terminal apparatus.

Further, in the embodiments described above, it is assumed that the mobile terminal apparatus 11-1 operates as the host terminal; however, it is also practicable to install a reader/writer at a restaurant or the like to make this reader/writer function as the host terminal. In this case, the mobile terminal apparatuses 11-1 through 11-3 operate as guest terminals.

It should be noted that, in the settlement system according to the present technology, it is practicable to provide the services for creating a photo album or a DVD of an event in which the user participated on the basis of the uploaded image data and the services for delivering the photo album or the DVD to user home for a fee. In this case, the service fees may be settled by use of the settlement ID, thereby allowing the user to pay the fees for the services with simplicity.

In addition, in the settlement system according to the present technology, it is practicable to relate the specific information for specifying one user with the ID of a settlement outsourcing service in which two or more settlement means can be registered as the settlement ID. In this case, it is arranged such that the user is able to select settlement means (an electronic value) with which to make settlement.

Further, in the embodiments described above, it is assumed that an event participation fee is equally divided by the number of participants for the amount of settlement money; however, it is also practicable to make the amount of settlement money in which the participants are weighted.

For example, the mediation server 12 may store gender information indicative of the gender of the user in relation with the settlement ID in which the male pays more than the female with a certain ratio for the amount of settlement money.

It is also practicable that the ratio of splitting the amount of money is set by a selective operation by the user through the above-mentioned payment splitting app or on a terminal installed in a restaurant or in a random manner.

In the examples described above, it is also practicable that, of the photographs (the image data) stored in a shared folder in the photo-sharing server 14, the photographs uploaded by the user who paid most are displayed as highlighted compared with the photographs uploaded by the other users.

It should be noted that the present technology is applicable to other than the settlement systems for executing payment splitting. For example, the present technology may be applied to entrance fee payment systems at predetermined facilities. In this case, a dedicated terminal handled by facilities staff or a reader/writer installed therein operates as the host terminal. When the user holds the mobile terminal apparatus thereof over the dedicated terminal or the reader/writer, the amount of money of the entrance fee is settled. In this case, such data as photographs held in the photo-sharing server 14 may be viewable by only the visitors to the facilities.

Further, it is also practicable that, in the mobile terminal apparatus 11, an application is activated by which a calendar in which schedules of two or more users are sharable is provided, thereby displaying photographs uploaded to the photo-sharing server 14.

While preferred embodiments of the present technology have been described using specific terms, such description is for illustrative purpose only, and it is to be understood by those skilled in the art that changes and variations may be made without departing from the spirit or scope of the following claims.

For example, in the present description, the systems each denotes an aggregation of two or more components (apparatuses, modules (parts), and so on) regardless whether these components are installed in a same housing or not. Therefore, a two or more apparatuses installed in separate housings and interconnected via a network and one apparatus in which two or more modules are installed in one housing are both systems.

Further, the present technology can take the configuration of cloud computing in which one function is processed dividedly and jointly by two or more apparatuses via a network.

Still further, each of the steps described with reference to the flowcharts described above can be executed by two or more apparatuses in a divided manner in addition to the execution by one apparatus.

Yet further, in a case where two or more processing operations are included in one step, these processing operations included in one step can be executed by two or more apparatuses in a divided manner in addition to the execution by one apparatus.

The present technology can take the following configuration.
(1) A terminal apparatus including:
   a first communication block configured to acquire identification information related with settlement associated with another terminal apparatus;
   an acquisition block configured to acquire settlement conditions related with settlement processing; and
   a second communication block configured to send identification information related with settlement associated with own apparatus and the identification information related with the settlement of the other terminal apparatus to a settlement processing apparatus as linked with the settlement conditions.
(2) The terminal apparatus according to (1) above, in which
   the second communication block receives a processing result of the settlement processing sent from the settlement processing apparatus.
(3) The terminal apparatus according to (1) or (2) above, in which
   the settlement conditions include information indicative of an amount of settlement money.
(4) The terminal apparatus according to any one of (1) through (3) above, in which
   the settlement conditions include information for specifying a destination of payment.
(5) The terminal apparatus according to any one of (1) through (4) above, in which
   the second communication block receives access information for accessing data stored as linked with the identification information related with the settlement of own apparatus and the other terminal apparatus.
(6) The terminal apparatus according to (5) above, in which
   the data include at least one of still image data, moving image data, or audio data.
(7) A communication method including the steps of:
   acquiring identification information related with settlement associated with another terminal apparatus;
   acquiring settlement conditions related with settlement processing; and
   sending identification information related with settlement associated with own apparatus and the identification information related with the settlement of the other terminal apparatus to a settlement processing apparatus as linked with the settlement conditions.
(8) A settlement processing apparatus including:
   a first communication block configured to receive settlement conditions related with settlement processing sent from any one of the plurality of terminal apparatuses and identification information related with settlement associated with a plurality of terminal apparatuses linked with the settlement conditions; and
   a settlement processing block configured to execute the settlement processing on a basis of the settlement conditions and identification information related with the settlement of the plurality of terminal apparatuses,
   in which the first communication block sends a processing result of the settlement processing.
(9) The settlement processing apparatus according to (8) above, in which
   the first communication block sends the processing result of the settlement processing to at least any one of the plurality of terminal apparatuses.
(10) The settlement processing apparatus according to (8) or (9) above, in which
   the first communication block sends the processing result of the settlement processing to a destination of payment.
(11) The settlement processing apparatus according to any one of (8) through (10) above, in which
   the settlement conditions include information indicative of an amount of settlement money.
(12) The settlement processing apparatus according to any one of (8) through (11) above, in which
   the settlement conditions include information for specifying a destination of payment.
(13) The settlement processing apparatus according to any one of (8) through (12) above, further including:
   a second communication block configured to send access information for accessing data linked with the identification information related with the settlement of the plurality of terminal apparatuses to the plurality of terminal apparatuses.
(14) The settlement processing apparatus according to (13) above, further including:
   an specific information storage block configured to store specific information for specifying each of users of the plurality of terminal apparatuses by relating the specific information with the identification information related with the settlement of the plurality of terminal apparatuses linked with the settlement conditions; and
   the second communication block sends the access information to the plurality of terminal apparatuses by use of the specific information of each of the plurality of users.
(15) The settlement processing apparatus according to (13) or (14) above, further including:
   a data storage block configured to store the data.
(16) The settlement processing apparatus according to any one of (13) through (15) above, in which
   the data includes at least one of still image data, moving image data, or audio data.
(17) The settlement processing apparatus according to any one of (8) through (16) above, in which
   an electronic value is held for use in the settlement processing for each identification information related with settlement of the plurality of terminal apparatuses; and
   the settlement processing block executes the settlement processing by use of the held electronic value for each identification information related with the settlement.
(18) The settlement processing apparatus according any one of (8) through (16) above, in which
   each of the plurality of terminal apparatuses holds an electronic value for use in the settlement processing for each identification information related with settlement of the plurality of terminal apparatuses; and
   the settlement processing block executes the settlement processing by use of the electronic value for each identification information related with the settlement held in each of the plurality of terminal apparatuses.
(19) A settlement method comprising the steps of:
   receiving settlement conditions related with settlement processing sent from any one of the plurality of terminal apparatuses and identification information related with settlement associated with a plurality of terminal apparatuses linked with the settlement conditions;
   executing the settlement processing on a basis of the settlement conditions and identification information related with the settlement of the plurality of terminal apparatuses; and
   sending a processing result of the settlement processing.
(20) A settlement system including:
   a terminal apparatus having
      a first communication block configured to acquire identification information related with settlement associated with another terminal apparatus;
      an acquisition block configured to acquire settlement conditions related with settlement processing; and
      a second communication block configured to send identification information related with settlement associated with own apparatus and the identification information related with the settlement of the other terminal apparatus to a settlement processing apparatus as linked with the settlement conditions; and
   a settlement processing apparatus having
      a third communication block configured to receive settlement conditions related with settlement processing sent from any one of a plurality of terminal apparatuses and identification information related with settlement of the plurality of terminal apparatuses linked with the settlement conditions; and
      a settlement processing block configured to execute the settlement processing on a basis of the settlement conditions and identification information related with the settlement of the plurality of terminal apparatuses;
      the third communication block sending a processing result of the settlement processing.

### [Reference Signs List]

10 ... Settlement system, 11, 11-1 through 11-3 ... Mobile terminal apparatuses, 12 ... Mediation server, 13 ... Settlement server, 14 ... Photo-sharing server, 111 ... First communication block, 112 ... Second communication block, 113 ... IC chip, 114 ... Control block, 121 ... Device driver, 122 ... Middleware, 123 ... Application, 131 ... Communication block, 132 ... Control block, 133 ... Storage block, 141 ... Settlement ID, 142 ... Specific information, 151 ... Communication block, 152 ... Control block, 153 ... Storage block, 161 ... Settlement processing block, 162 ... Electronic value, 171 ... Communication block, 172 ... Control block, 173 ... Storage block, 181 ... Image data, 211 ... Electronic value, 311 ... Integrated server, 321 ... Communication block, 322 ... Control block, 323 ... Storage block

## Claims

1. A terminal apparatus comprising:
a first communication block configured to acquire identification information related with settlement associated with another terminal apparatus;
an acquisition block configured to acquire settlement conditions related with settlement processing; and
a second communication block configured to send identification information related with settlement associated with own apparatus and the identification information related with the settlement of the other terminal apparatus to a settlement processing apparatus as linked with the settlement conditions.

2. The terminal apparatus according to claim 1, wherein
the second communication block receives a processing result of the settlement processing sent from the settlement processing apparatus.

3. The terminal apparatus according to claim 1, wherein
the settlement conditions include information indicative of an amount of settlement money.

4. The terminal apparatus according to claim 1, wherein
the settlement conditions include information for specifying a destination of payment.

5. The terminal apparatus according to claim 1, wherein
the second communication block receives access information for accessing data stored as linked with the identification information related with the settlement of own apparatus and the other terminal apparatus.

6. The terminal apparatus according to claim 5, wherein
the data include at least one of still image data, moving image data, or audio data.

7. A communication method comprising the steps of:
acquiring identification information related with settlement associated with another terminal apparatus;
acquiring settlement conditions related with settlement processing; and
sending identification information related with settlement associated with own apparatus and the identification information related with the settlement of the other terminal apparatus to a settlement processing apparatus as linked with the settlement conditions.

8. A settlement processing apparatus comprising:
a first communication block configured to receive settlement conditions related with settlement processing sent from any one of the plurality of terminal apparatuses and identification information related with settlement associated with a plurality of terminal apparatuses linked with the settlement conditions; and
a settlement processing block configured to execute the settlement processing on a basis of the settlement conditions and identification information related with the settlement of the plurality of terminal apparatuses,
wherein the first communication block sends a processing result of the settlement processing.

9. The settlement processing apparatus according to claim 8, wherein
the first communication block sends the processing result of the settlement processing to at least any one of the plurality of terminal apparatuses.

10. The settlement processing apparatus according to claim 8, wherein
the first communication block sends the processing result of the settlement processing to a destination of payment.

11. The settlement processing apparatus according to claim 8, wherein
the settlement conditions include information indicative of an amount of settlement money.

12. The settlement processing apparatus according to claim 8, wherein
the settlement conditions include information for specifying a destination of payment.

13. The settlement processing apparatus according to claim 8, further comprising:
a second communication block configured to send access information for accessing data linked with the identification information related with the settlement of the plurality of terminal apparatuses to the plurality of terminal apparatuses.

14. The settlement processing apparatus according to claim 13, further comprising:
an specific information storage block configured to store specific information for specifying each of users of the plurality of terminal apparatuses by relating the specific information with the identification information related with the settlement of the plurality of terminal apparatuses linked with the settlement conditions; and
the second communication block sends the access information to the plurality of terminal apparatuses by use of the specific information of each of the plurality of users.

15. The settlement processing apparatus according to claim 13, further comprising:
a data storage block configured to store the data.

16. The settlement processing apparatus according to claim 13, wherein
the data includes at least one of still image data, moving image data, or audio data.

17. The settlement processing apparatus according to claim 8, wherein
an electronic value is held for use in the settlement processing for each identification information related with settlement of the plurality of terminal apparatuses; and
the settlement processing block executes the settlement processing by use of the held electronic value for each identification information related with the settlement.

18. The settlement processing apparatus according to claim 8, wherein
each of the plurality of terminal apparatuses holds an electronic value for use in the settlement processing for each identification information related with settlement of the plurality of terminal apparatuses; and
the settlement processing block executes the settlement processing by use of the electronic value for each identification information related with the settlement held in each of the plurality of terminal apparatuses.

19. A settlement method comprising the steps of:
receiving settlement conditions related with settlement processing sent from any one of the plurality of terminal apparatuses and identification information related with settlement associated with a plurality of terminal apparatuses linked with the settlement conditions;
executing the settlement processing on a basis of the settlement conditions and identification information related with the settlement of the plurality of terminal apparatuses; and
sending a processing result of the settlement processing.

20. A settlement system comprising:
a terminal apparatus having
a first communication block configured to acquire identification information related with settlement associated with another terminal apparatus;
an acquisition block configured to acquire settlement conditions related with settlement processing; and
a second communication block configured to send identification information related with settlement associated with own apparatus and the identification information related with the settlement of the other terminal apparatus to a settlement processing apparatus as linked with the settlement conditions; and
a settlement processing apparatus having
a third communication block configured to receive settlement conditions related with settlement processing sent from any one of a plurality of terminal apparatuses and identification information related with settlement of the plurality of terminal apparatuses linked with the settlement conditions; and
a settlement processing block configured to execute the settlement processing on a basis of the settlement conditions and identification information related with the settlement of the plurality of terminal apparatuses;
the third communication block sending a processing result of the settlement processing.
